Europäisches Patentamt

European Patent Office

Office européen des brevets

(19)

(11) Veröffentlichungsnummer: **0 037 024**
**B1**

(12) **EUROPÄISCHE PATENTSCHRIFT**

(45) Veröffentlichungstag der Patentschrift:
16.05.84

(21) Anmeldenummer: 81102080.9

(22) Anmeldetag: 20.03.81

(51) Int. Cl.³: **B 05 D 7/22**, B 05 C 7/00,
A 22 C 13/00

(54) Verfahren zur Herstellung einer schlauchförmigen Verpackungshülle mit einem Überzug auf der Innenseite und Vorrichtung zur Durchführung des Verfahrens.

(30) Priorität: 28.03.80 DE 3012251

(43) Veröffentlichungstag der Anmeldung:
07.10.81 Patentblatt 81/40

(45) Bekanntmachung des Hinweises auf die Patenterteilung:
16.05.84 Patentblatt 84/20

(84) Benannte Vertragsstaaten:
AT BE CH DE FR GB IT LI LU NL SE

(56) Entgegenhaltungen:
EP - A - 0 001 545
DE - A - 1 786 517
DE - A - 2 659 000
DE - A - 2 856 253
DE - B - 1 492 708

(73) Patentinhaber: HOECHST AKTIENGESELLSCHAFT,
Postfach 80 03 20, D-6230 Frankfurt am Main 80 (DE)

(72) Erfinder: Becker, Reinhold, Dr. Dipl.-Ing., Am Hohen
Stein 18, D-6200 Wiesbaden (DE)
Erfinder: Kälberer, Heinz, Dr., Paradiesstrasse 51,
D-6229 Walluf (DE)
Erfinder: Regner, Richard, Dipl.-Ing.,
Holthausenstrasse 12, D-6500 Mainz-Bretzenheim (DE)

Verfahren zur Herstellung einer schlauchförmigen Verpackungshülle mit einem
Überzug auf der Innenseite und Vorrichtung zur Durchführung des Verfahrens

Die Erfindung betrifft ein Verfahren zur Herstellung einer schlauchförmigen Verpackungshülle von der im Oberbegriff des Anspruchs 1 genannten Art sowie Vorrichtungen der in den Oberbegriffen der Ansprüche 10 und 12 genannten Art zur Durchführung des Verfahrens. Dieser Stand der Technik ist aus der DE-B-14 92 708 bekannt.

Die nach dem erfindungsgemäßen Verfahren hergestellten Verfahrenserzeugnisse dienen als Verpackungshülle, insbesondere als künstliche Wursthaut für Brüh- und Kochwurst.

In der GB-A-12 01 830 ist ein Verfahren zur Innenbeschichtung schlauchförmiger Verpackungshüllen aus Cellulosehydrat mit wäßriger Kunststoff-Dispersion beschrieben, bei dem man den Cellulosehydratschlauch fortlaufend horizontal durch den Quetschspalt eines vertikalen Quetschwalzenpaares hindurchführt und ihn danach mittels einer Umlenkrolle in die Vertikale umlenkt. Im Hohlraum des aus dem Spalt des Quetschwalzenpaares austretenden Schlauchteils befindet sich eine bestimmte Menge wäßriger Kunststoff-Dispersion als Beschichtungsflüssigkeit. Der vertikal verlaufende Schlauch wird oberhalb des Spiegels der Beschichtungsflüssigkeit in einem nach oben gerichteten Trockentunnel mit Wärme beaufschlagt.

Aus der DE-A-28 01 038 ist ein Verfahren zur Innenbeschichtung von Schläuchen bekannt, bei dem man einen Schlauch aus Kunststoff oder dichtem Gewebe fortlaufend durch den Quetschspalt eines vertikalen Quetschwalzenpaares führt, wobei der Schlauch flachliegend schräg in Richtung von unten nach oben auf das Walzenpaar zu geführt wird; der Schlauch liegt vor Eintritt in den Dosierspalt des Walzenpaares zunächst flachliegend dem Umfang der unteren Walze des Walzenpaares und nach Austritt aus dem Dosierspalt der oberen Walze flachliegend jeweils teilweise an. Nach Abheben des flachliegenden Schlauches von der Oberfläche der oberen Walze des Walzenpaares verläuft er von unten nach oben schräg ansteigend. Die Beschichtungsflüssigkeit befindet sich im Schlauchteil — in Schlauchfortbewegungsrichtung betrachtet — vor dem Quetschwalzenpaar.

Bei einem in der US-A-29 01 358 beschriebenen Verfahren zur Innenbeschichtung von Schläuchen aus Cellulosehydrat mit wäßriger Reaktionslösung wird der zu beschichtende Schlauch flachliegend zunächst horizontal geführt, dann unter teilweiser Umschlingung des Umfangs einer Walze eines horizontalen Quetschwalzenpaares durch den Spalt desselben hindurch und danach vertikal in Richtung von unten nach oben verlaufend geführt. Im Schlauchhohlraum oberhalb des Quetschspalts des Walzenpaares ist eine bestimmte Menge Reaktionsflüssigkeit eingeschlossen. Der beschichtete Schlauch durchläuft ein erstes Quetschwalzenpaar, verbleibt danach im flachgelegten Zustand bis zum Erreichen eines zweiten Quetschwalzenpaars und wird dann in aufgeblasenem Zustand getrocknet, wobei er in waagerechter Richtung eine Trockeneinrichtung durchläuft.

Weder dieses erste noch dieses zweite Quetschwalzenpaar sind jedoch zur Dosierung der Beschichtungsflüssigkeit geeignet. Das gleiche Verfahrensprinzip ist auch aus der DE-B-14 92 708 bekannt. Nach dieser Druckschrift wird der Schlauch mit Beschichtungsflüssigkeit unter Bildung einer Schlauchschlaufe umgelenkt, oberhalb des Spiegels der Beschichtungsflüssigkeit vertikal durch den Spalt von Quetschwalzen hindurchgeführt und bis zum Erreichen eines waagrechten Trockenkanals im flachgelegten Zustand gehalten.

Diese bekannten Verfahren bzw. Vorrichtungen zeigen den Nachteil, daß der erhaltene Überzug auf der Schlauchinnenseite relativ ungleichmäßig dick ausgebildet ist, insbesondere wenn die Überzugsdicke relativ groß ist.

Den bekannten Verfahren zur Innenbeschichtung von Schläuchen aus Cellulosehydrat mit wäßriger Kunststoff-Dispersion ist der Nachteil gemeinsam, daß die wegen des hohen Wassergehalts der verwendeten Kunststoff-Dispersionen stark wasserdurchfeuchteten Cellulosehydratschläuche beim anschließenden Trocknen die Neigung haben, in unerwünschter Weise ihre Dimension durch Schrumpfung zu verändern. Da ferner bei Verwendung von wäßriger Kunststoff-Dispersion mit relativ niedrigem Anteil an dispergiertem Kunststoff die Dispersions-Schicht auf der Schlauchinnenseite infolge ihrer viskositätsbedingten Fließfähigkeit frei an der Schlauchinnenseite abläuft, ergibt sich nach Wärmeeinwirkung ein ungleichmäßiger Filmüberzug aus Kunststoff auf der Schlauchinnenseite. Nachteiligerweise ist auch die zur Ausbildung des genannten Filmüberzugs durch Wärmeeinwirkung zu vertreibende und durch Diffusion durch die Schlauchwand nach außen zu transportierende Wassermenge groß im Verhältnis zur Menge des Kunststoffanteils in der Dispersion.

Die bekannten Verfahren sind demnach energetisch unvorteilhaft und führen zudem zu ungleichmäßigem Filmüberzug auf der Schlauchinnenseite. Bei Verwendung von Quetschwalzen wird zuviel Beschichtungsflüssigkeit zurückgehalten, so daß eine ungenügende Schichtdicke resultiert.

Nachfolgend soll unter einem horizontalen Walzenpaar ein solches verstanden werden, bei dem durch die parallelen Achsen seiner Walzen eine gemeinsame vertikale Ebene legbar ist; als horizontaler Walzenspalt wird der Spalt bezeichnet, der durch einanderzugewandter Außenseiten parallelabständiger Walzen eines Walzenpaares vorbezeichneter Anordnung begrenzt ist.

Der vorliegenden Erfindung liegt die Aufgabe zugrunde, ein Verfahren zur Ausbildung eines gleichmäßig dicken unterbrechungsfreien Überzugs auf der Innenseite eines Schlauchs aus Cellulosehydrat unter Verwendung wäßriger, zur Bildung eines Überzugs befähigten, chemischen Stoff enthaltende Flüssigkeit als Beschichtungsflüssigkeit vorzuschlagen, das energetisch vorteilhaft durchführbar ist, das exakte Dosieren der Beschichtungsflüssigkeit ermöglicht und bei dem die Innenbeschichtung praktisch ablauffrei erfolgt; insbesondere liegt ihr die Aufgabe zugrunde, ein Verfahren zur Ausbildung eines gleichmäßig dicken unterbrechungsfreien Filmüberzugs aus synthetischem Polymerisat auf der Innenseite eines Schlauchs aus Cellulosehydrat unter Verwendung wäßriger Kunststoff-Dispersion als Beschichtungsflüssigkeit vorzuschlagen, das energetisch vorteilhaft durchführbar ist, bei dem exaktes Dosieren der Beschichtungsflüssigkeit möglich ist und bei der die Innenbeschichtung praktisch ablauffrei erfolgt.

Die der Erfindung zugrunde liegende Aufgabe wird durch das im Anspruch 1 angegebene Verfahren, durch die in den Ansprüchen 10 und 12 angegebenen Vorrichtungen zur Durchführung des Verfahrens gelöst. Die Unteransprüche betreffen Weiterbildungen des Verfahrens bzw. der Vorrichtungen.

Vorteilhaft wird der Schlauch bei der Durchführung des Verfahrens dem Dosierspalt der Vorrichtung unter Faltenbildung verhindernden Bedingungen zu- sowie faltenfrei in diesen ein- und durch diesen hindurchgeführt.

Die Verfahrensdurchführung erfolgt vorteilhaft unter Bedingungen, die verhindern, daß der Druck der Stützluft im Hohlraum des Schlauchs den Beschichtungsflüssigkeitsvorrat in der Schlauchschlaufe vor der Dosiereinrichtung in Richtung entgegen der Fortbewegung des Schlauchs und auf die Vorratsrolle hin zu pressen vermag.

Bei der Durchführung des Verfahrens wird der Schlauch fortlaufend und mit stetiger Geschwindigkeit längsaxial fortbewegt; nachfolgend wird die genannte Bewegung des Schlauches kurz mit dem Ausdruck »fortbewegt« beschrieben.

Die Fortbewegung des Schlauchs kann beispielsweise dadurch erfolgen, daß man ihn nach Trocknung und Abkühlung sowie vor seiner Aufwicklung fortlaufend durch den Quetschspalt eines Quetschwalzenpaares mit rotierbaren Walzen führt, die antreibbar ausgebildet sind und beispielsweise mit Hilfe von Motoren angetrieben werden.

Das Verfahren wird in der Weise durchgeführt, daß der Schlauch mit einer Geschwindigkeit im Bereich von vorteilhaft 8 bis 60 m/min fortbewegt wird, insbesondere vorteilhaft ist eine Fortbewegungsgeschwindigkeit des Schlauchs im Bereich zwischen 20 und 40 m/min.

Zur Durchführung des Verfahrens wird eine wäßrige Kunststoff-Dispersion verwendet, die einen im Verhältnis zur Menge des Dispersionsmittels hohen Anteil an dispergiertem Kunststoff besitzt. Als wäßrige Kunststoff-Dispersion mit hohem Anteil an dispergiertem Kunststoff, bezogen auf das Gesamtgewicht der wäßrigen Dispersion, gilt eine solche, die wenigstens 15 Gew.-% dispergierten Kunststoff enthält, besonders vorteilhaft sind wäßrige Kunststoff-Dispersionen, die einen Anteil im Bereich von 20 bis 60 Gew.-%, insbesondere 30 bis 40 Gew.-%, dispergierten Kunststoff, jeweils bezogen auf das Gesamtgewicht der Dispersion, enthalten.

Zur Durchführung des Verfahrens geeignete wäßrige Kunststoff-Dispersionen sind insbesondere solche, deren dispergierter, thermoplastischer Kunststoff befähigt ist, nach Vertreiben des Dispersionsmittels durch hinreichende Wärme und Verschmelzen des Dispergierten, Filme zu bilden, insbesondere solche, die praktisch undurchlässig für Wasser und Wasserdampf sind. Bevorzugt sind dabei solche wäßrigen Kunststoff-Dispersionen, die als dispergierten Kunststoffanteil Copolymerisate mit überwiegendem Anteil an copolymerisiertem Vinylidenchlorid aufweisen, vorteilhaft solche, die wenigstens 75 Gew.-% copolymerisiertes Vinylidenchlorid umfassen. Ganz besonders geeignet sind solche wäßrigen Kunststoff-Dispersionen genannter Konzentration, die als dispergierten Kunststoffanteil Copolymerisate enthalten, die in der DE-B-25 12 995 sowie der DE-C-25 12 994 beschrieben sind. Die genannten Kunststoffe bzw. Kunststoff-Dispersion sind nicht Gegenstand der vorliegenden Erfindung.

Der zur Durchführung der Erfindung zur Verwendung gelangende, bevorzugt faserverstärkte Cellulosehydratschlauch hat vorteilhaft einen Quellwert (Wasserrückhaltevermögen) im Bereich von 120 bis 140% (DIN 53 814).

Der Cellulosehydratschlauch besitzt beispielsweise eine Wanddicke im Bereich von ca. 30 bis 300 µm, vorteilhaft eine solche im Bereich von 80 bis 120 µm.

Unter einem faserverstärkten Cellulosehydratschlauch soll ein solcher verstanden werden, der eine in seine Wandung eingelagerte Faserbahn enthält. Die Fasereinlage in der Schlauchwand hindert die Diffusion von Wasser durch die Schlauchwand nicht.

Der bevorzugt faserverstärkte Cellulosehydratschlauch enthält in seiner Wandung vorteilhaft einen Wasseranteil im Bereich von 8 bis 12 Gew.-%, bezogen auf das Gesamtgewicht des Schlauchs sowie einen Anteil im Bereich von 18 bis 24 Gew.-%, vorteilhaft einen solchen von 22 Gew.-%, zur Weichmachung von Cellulosehydrat befähigtem, chemischem Mittel, beispielsweise Glycerin, Glykol oder Polyglykol.

Die gewichtsprozentualen Angaben beziehen sich dabei jeweils auf das Gesamtgewicht des faserverstärkten Cellulosehydratschlauchs.

Der wie vorstehend individualisierte, bevorzugt faserverstärkte sowie chemisches Weichmachungsmittel und Wasser enthaltende Cellulosehydratschlauch ist als solcher nicht Gegenstand der vorliegenden Erfindung.

Unter der Bezeichnung »Cellulosehydratschlauch« ist im Rahmen der vorliegenden Erfindungsbeschreibung und der Ansprüche definitionsgemäß sowohl ein noch keinem Trocknungsvorgang unterworfener Schlauch aus in Gelzustand befindlichem Cellulosehydrat zu verstehen, der den vorgenannten Anteil an zur Weichmachung von Cellulosehydrat befähigtem chemischem Mittel angegebenen chemischen Aufbaus in der genannten Menge enthält, als auch ein Cellulosehydratschlauch, der bereits einem Trocknungsvorgang unterworfen wurde und der den genannten Anteil an Wasser und Weichmachungsmittel der genannten Art enthält und auf seiner Oberfläche eine für Wasser sowie Wasserdampf durchlässige haftmittelnde Schicht aus chemischem Mittel besitzt, beispielsweise eine Schicht aus einem wasserunlöslichen, durch Wärmehärtung gebildeten Reaktionsprodukt aus Epichlorhydrin mit einem Polyamin-Polyamid, beispielsweise eine Schicht einer Dicke entsprechend einem Flächengewicht im Bereich von vorteilhaft 30 bis 100 mg/m² Substratoberfläche; die bezeichnete haftvermittelnde Schicht führt bei der Verfahrensdurchführung zu einem Verfahrenserzeugnis, bei dem der Filmüberzug aus Kunststoff fest mit der Substratoberfläche verbunden ist.

Der bezeichnete Schlauch aus Cellulosehydrat im Gelzustand sowie der bezeichnete Cellulosehydratschlauch mit haftvermittelnder Schicht aus chemischem Stoff auf seiner Oberfläche wird im Rahmen der Erfindungsbeschreibung und der Ansprüche jeweils als »Ausgangsschlauch« bezeichnet; diese Schläuche stellen jeweils das Verfahrensausgangsprodukt dar.

Die Ausgangsschläuche sind vorzugsweise jeweils faserverstärkt.

Als Ausgangsschlauch, Verfahrensausgangsprodukt, wird beispielsweise ein vorteilhaft faserverstärkter Schlauch aus Cellulosehydrat bezeichnet und verwendet, der einen Quellwert von 120 bis 140%, beispielsweise ca. 130%, einen Wassergehalt von 8 bis 12 Gew.-%, beispielsweise einen von 10 Gew.-%, und einen Anteil an Glycerin als Weichmacher von 18 bis 24 Gew.-%, beispielsweise einen solchen von 22 Gew.-%, enthält und auf seiner Innenseite eine wasser- und wasserdampfdurchlässige, dünne haftvermittelnde Schicht aus chemischer Substanz, beispielsweise eine Schicht einer Dicke entsprechend 30 bis 100 mg/m² eines wasserunlöslichen Reaktionsproduktes aus Epichlorhydrin und einem Polyamin-Polyamid, besitzt.

Das Verfahren wird in der Weise durchgeführt, daß der Kunststoff-Filmüberzug auf der Innenseite des Verfahrensendproduktes (Verfahrenserzeugnis) eine Dicke entsprechend einem Flächengewicht im Bereich von vorteilhaft 8 bis 20 g Kunststoff pro m² Substratoberfläche, bevorzugt 10 bis 15 g Kunststoff pro m² Substratoberfläche, besitzt.

Der Filmüberzug ist physikalisch homogen, er ist gleichmäßig dick sowie unterbrechungsfrei.

Nachfolgend soll die Durchführung des erfindungsgemäßen Verfahrens beispielhaft beschrieben werden, wobei zu dessen Verwirklichung eine besonders geeignete Vorrichtung zur Verwendung gelangt und beschrieben wird.

Der Ausgangsschlauch hat beispielsweise einen Durchmesser von 90 mm mit einer flachgelegten Breite von 143 mm.

Auf einer drehbar ausgebildeten, ortsfest gelagerten Vorratstrommel ist ein langes Stück des genannten Schlauchs, beispielsweise ein solches einer Länge von 350 m, flachliegend aufgewickelt.

Von der Vorratsrolle wird der Schlauch fortlaufend abgewickelt und in längsaxialer Richtung unter Bildung einer Schlauchschlaufe und zunächst in Richtung von oben nach unten und dann nach Umlenkung, beispielsweise durch eine drehbar ausgebildete Umlenkrolle von unten nach oben mit gleichbleibender Geschwindigkeit, beispielsweise 20 bis 40 m/min, fortbewegt. Im Hohlraum des die Schlauchschlaufe bildenden Schlauchstücks befindet sich eine bestimmte Menge wäßriger Dispersion eines thermoplastischen Kunststoffs, beispielsweise 10 Liter einer beispielsweise 30gew.-%igen Dispersion, deren dispergierter Kunststoffanteil beispielsweise zu 88 Gew.-% aus copolymerisiertem Vinylidenchlorid, zu 3 Gew.-% aus copolymerisierter Acrylsäure, zu 4 Gew.-% aus copolymerisiertem Acrylnitril und zu 5 Gew.-% aus copolymerisiertem Acrylsäuremethylester besteht, wobei die gewichtsprozentualen Angaben sich jeweils auf das Gesamtgewicht des dispergierten Copolymerisats beziehen. Eine Dispersion der genannten Konzentration ist herstellbar, indem man beispielsweise von einer solchen ausgeht, die beispielsweise 55 Gew.-% dispergierten Copolymerisatanteil enthält und diese durch Verdünnen mit Wasser auf die für die Verfahrensdurchführung geeignete Konzentration bringt.

Die zur Beschichtung der Innenseite der Gesamtlänge des verwendeten Cellulosehydratschlauchs mit Kunststofffilmüberzug erforderliche genannte Vorratsmenge wäßriger Kunststoff-Dispersion, die zu Verfahrensbeginn in den Hohlraum des Schlauchs eingefüllt wird, ist derart bemessen, daß der Hohlraum des vertikalen Schlauchschlaufenteils teilweise mit Beschichtungsflüssigkeit gefüllt ist; hinreichend weit oberhalb des Spiegels der im vertikalen Schlauchschlaufenteil befindlichen Teilmenge des Beschichtungsflüssigkeitsvorrats wird der Schlauch fortlaufend durch den profilierten Dosierspalt einer Dosiervorrichtung mit jeweils rotierbaren sowie rotierenden Dosierelementen, die den Dosierspalt jeweils seitlich begrenzen und bei dem die Außenseite wenigstens eines dieser Elemente profiliert ausgebildet ist, hindurchgeführt.

Die Angabe, daß der Schlauch oberhalb des Spiegels der im vertikalen Schlauchschaufenteil befindlichen Teilmenge der Beschichtungsflüssigkeit durch den profilierten Dosierspalt hindurchgeführt wird, soll definitionsgemäß auch eine Ausführungsform umfassen, bei der der bezeichnete Teil des Schlauchs derart durch den Dosierspalt der Dosiervorrichtung geführt wird, daß der Flüssigkeitsspiegel im Schlauch praktisch mit der horizontalen Ebene übereinstimmt, in der der Dosierspalt verläuft.

Der Ausdruck »Schlauch mit Stützluft im Schlauchhohlraum« bezieht sich auf den aus dem Dosierspalt des horizontalen Walzenpaares austretenden vertikal in Richtung von unten nach oben verlaufenden Schlauch mit flüssiger dünner Schicht aus wäßriger Kunststoff-Dispersion auf der Innenseite.

Die Formulierung »Schlauch mit Stützluft in seinem Hohlraum und flüssiger dünner Schicht aus wäßriger Kunststoff-Dispersion bezeichneter Konzentration auf seiner Innenseite« soll definitionsgemäß Schlauchteile umfassen, die im Querschnitt kreisförmig bzw. praktisch kreisförmig sind.

Die Form des Schlauchs mit Stützluft im Hohlraum wird durch zur Aufrechterhaltung seiner Querschnittsform hinreichenden Stützluftdruck gewährleistet; bei mit Stützluft gefüllten Schläuchen mit kreisförmigem Querschnitt kann die Stützluft auch einen Druck auf die Schlauchinnenwand ausüben, der in geringem Umfang radiale Dehnung des Schlauchs zu bewirken vermag.

Um zu verhindern, daß die Stützluft im Schlauchhohlraum durch ihren Druck etwa die Beschichtungsflüssigkeitsvorratsmenge in der Schlauchschlaufe entgegen der Richtung der Richtung der Schlauchfortbewegung und auf die Vorratsrolle zu preßt, ist es vorteilhaft, in Fortbewegungsrichtung des Schlauchs, vorzugsweise vor der Umlenkung desselben in die Vertikale durch die Umlenkrolle, den mit Vorratsflüssigkeit gefüllten Schlauch fortlaufend flach zusammenzupressen, beispielsweise indem man ihn fortlaufend durch den Spalt eines Walzenpaars mit rotierbar ausgebildeten Walzen führt, in dessen Spalt der flüssigkeitsgefüllte Schlauch zusammengepreßt wird. Die Zusammenpressung des vorzugsweise schräg in Richtung von oben nach unten verlaufenden Schlauchs kann vorteilhaft auch in der Weise erfolgen, daß zugleich mit dieser eine Nachförderung von Beschichtungsflüssigkeit nach Maßgabe ihres Verbrauchs durch Innenbeschichtung des Schlauchs und Aufrechterhaltung des Niveaus des Spiegels derselben im vertikalen Schlauchteil erfolgt. Man kann diese kombinierte Wirkung vorteilhaft beispielsweise dadurch erreichen, daß man den Schlauch durch den Preßspalt eines zusammenarbeitenden Paars an ihren Außenseiten profiliert ausgebildeter Förderbänder (DE-C-26 59 000) führt oder eine Vorrichtung verwendet, wie sie in der DE-C-25 57 994 beschrieben ist.

Die Breite des Dosierspalts der Dosiereinrichtung entspricht der doppelten Schlauchwanddicke.

Unter einer dünnen, flüssigen Schicht aus wäßriger Kunststoff-Dispersion auf der Schlauchinnenseite des mit Stützluft gefüllten Schlauchs, soll eine solche verstanden werden, die eine geringere Dicke besitzt als die, die sich auf der Innenseite des vertikal geführten Schlauchs vor Eintritt in den Dosierspalt des Walzenpaares befindet und die nach Vertreibung des Dispersionsmittels aus der flüssigen Schicht und Verschmelzen des Dispergierten durch Einwirkung von Wärme hierfür ausreichender Temperatur einen unterbrechungsfreien, gleichmäßig dicken Filmüberzug einer Dicke entsprechend einem Flächengewicht von vorteilhaft 8 bis 20 g Kunststoff pro m² Substratoberfläche ergibt. Die Abstimmung der genannten Verfahrensparameter aufeinander kann für den jeweiligen Fall durch wenige und einfache Vorversuche in einfacher Weise ermittelt werden.

Das fortlaufende Hindurchführen des Schlauchs durch den profilierten Dosierspalt der Dosiervorrichtung führt in Abhängigkeit von der Fortbewegungsgeschwindigkeit des Schlauchs sowie der Konzentration der verwendeten wäßrigen Kunststoff-Dispersion zum Anstau wäßriger Dispersion im Schlauchhohlraum unmittelbar vor dem Dosierspalt.

Der den Dosierspalt der Vorrichtung verlassende mit Stützluft gefüllte Schlauch mit dünner Schicht aus wäßriger Kunststoff-Dispersion wird vertikal in Richtung von unten nach oben geführt und der Einwirkung von Wärme unterworfen, deren Temperatur hinreicht, das Dispersionsmittel der flüssigen, dünnen Schicht auf der Schlauchinnenseite durch Diffusion durch die Schlauchwand nach außen zu vertreiben und das Dispergierte unter Ausbildung eines unterbrechungsfreien Kunststofffilmüberzugs auf der Schlauchinnenseite zu verschmelzen.

Die Wärmebeaufschlagung des Schlauchs zur Trocknung der flüssigen Schicht aus wäßriger Dispersion auf der Innenseite des mit Stützluft gefüllten Schlauchs erfolgt beispielsweise dadurch, daß man diesen vertikal in Richtung von unten nach oben durch einen geraden Trockentunnel hindurchführt, beispielsweise einen solchen, der mit Infrarot-Heizelementen ausgestattet ist. Am Anfang des Trockentunnels wird der Schlauch beispielsweise auf eine Temperatur von ca. 80°C und am Ende desselben auf eine Temperatur von beispielsweise ca. 140°C erhitzt.

Vorteilhaft wird der Schlauch vor der Wärmebeaufschlagung durch eine Luftstrecke, beispielsweise einer Länge im Bereich von 50 bis 100 cm, hindurchgeführt. Die Umgebungsluft im Bereich der Luftstrecke hat Raumtemperatur.

Vorteilhaft wird der Schlauch im Bereich der Luftstrecke mittels einer Vibrationseinrichtung in leichte Vibration versetzt, um die dünne, flüssige Schicht auf seiner Innenseite zu vergleichmäßigen.

Die im Hohlraum des aus dem Dosierspalt der Dosiervorrichtung ausgetretenen Schlauchstücks jeweils erforderliche Menge Stützluft wird zu Beginn der Verfahrensdurchführung in diesen Hohlraum eingeführt; der Schlauchinnendruck wird während der Verfahrensdurchführung dadurch aufrechterhalten, daß der Schlauch nach erfolgter Ausbildung des Kunststoff-Filmüberzugs fortlaufend, entlang einer schmalen Zone über seine gesamte Breite flach zusammengepreßt wird, beispielsweise indem man ihn durch den Quetschspalt eines Walzenpaares hindurchführt.

Die Umfangsgeschwindigkeit der angetriebenen Walzen des Quetschwalzenpaares liegt im Bereich zwischen 8 und 60 m/min, beispielsweise besitzen sie eine Umfangsgeschwindigkeit von 30 m/min.

Die Umfangsgeschwindigkeit der Walzen des Quetschwalzenpaares bestimmen die Fortbewegungsgeschwindigkeit des Schlauchs.

Nach der Wärmebeaufschlagung und anschließenden Abkühlung des Schlauchs soweit, daß der Filmüberzug nicht mehr klebend ist, beispielsweise mit Kaltluft, und bevor der abgekühlte Schlauch im Spalt eines Quetschwalzenpaars flach zusammengepreßt wird, durch das er längsaxial fortbewegt wird, wird er gegebenenfalls mit Wasser befeuchtet, beispielsweise durch Besprühen. Er wird dabei vorteilhaft auf einen Wassergehalt im Bereich von 8 bis 12 Gew.-%, beispielsweise auf 10 Gew.-%, jeweils bezogen auf sein Gesamtgewicht, gebracht.

Das Verfahrenserzeugnis wird dann auf eine rotierbar sowie antreibbar ausgebildete und angetriebene Rolle aufgewickelt.

Die Bezeichnung »Dosiervorrichtung mit profiliertem, horizontalem Dosierspalt, der durch jeweils rotierbare, rotierende Elemente begrenzt wird, wobei die Außenseite wenigstens eines desselben profiliert ausgebildet ist«, umfaßt definitionsgemäß sowohl ein horizontales Walzenpaar, bei dem die Umfangsfläche wenigstens einer Walze profiliert ausgebildet ist, wobei sich unmittelbar benachbart gegenüberliegende aufeinanderzuweisende Teile der Umfangsflächen der Walzen gemeinsam einen Spaltraum begrenzen, der als profilierter Dosierspalt bezeichnet wird, als auch ein Endlosbandpaar, bei dem wenigstens ein Endlosband eine profiliert ausgebildete Außenseite besitzt und die aufeinanderzuweisenden und stetig konvergierend verlaufenden geraden Teile der Außenseiten der Endlosbänder gemeinsam einen Spaltraum begrenzen, der im Bereich seiner geringsten Breite als profilierter Dosierspalt bezeichnet wird.

Die Dosiervorrichtung in der Ausbildung als horizontales Walzenpaar, bei dem durch die horizontal verlaufenden Walzenachsen eine gemeinsame horizontale Ebene legbar ist, ist dadurch charakterisiert, daß bevorzugt die beiden Walzen des Paares profiliert ausgebildete Walzenumfangsflächen besitzen.

Es soll unter einer profiliert ausgebildeten Walzenumfangsfläche eine solche verstanden werden, die baulich strukturell derart ausgebildet ist, daß sie aus einer Vielzahl diskreter jeweils durch Vertiefungen voneinander getrennter Teilflächen gebildet ist, die jeweils die Preßkraft auf die Schlauchaußenseiten ausübenden Flächen der Walzen bilden. Die Teilflächen stellen jeweils die Oberseiten jeweils gleich hoher Erhebungen auf der Walzenaußenseite dar. Die durch die Summe der Teilflächen aller Erhebungen gebildeten Gesamtumfangsflächen der Walzen kann wesentlich geringer als die Gesamtfläche der Vertiefungen der Walzen sein, die sich jeweils zwischen den Erhebungen derselben erstrecken.

Die die Teilflächen bildenden Oberseiten der Erhebungen sind jeweils konkav sowie jeweils gleichmäßig gekrümmt, wobei ihre Krümmung der Krümmung der Walzenumfangslinie entspricht.

Der Boden der Vertiefungen ist in gleicher Weise wie die Oberseiten der Erhebungen konkav gekrümmt ausgebildet.

Die Oberseiten der Erhebungen haben jeweils gleiche Form und Abmessung.

Der Abstand von Vertiefungsboden zur Begrenzungskantenoberseite der angrenzenden Erhebung bestimmt die Tiefe der Vertiefung und bildet einen Durchlaß für die wäßrige Dispersion.

Die Erhebungen bilden gemeinsam ein bevorzugt geometrisch regelmäßiges Raster.

Die profiliert ausgebildete Walzenoberfläche wird daher auch als rasterartig ausgebildet bezeichnet.

Sofern in bevorzugter Ausbildung des Dosierwalzenpaares beide Walzen profiliert ausgebildete Oberflächen besitzen, ist die Profilierung beider Walzenoberflächen gleichartig.

Die rasterartige Ausbildung der Walzenoberflächen kann beispielsweise dadurch entstehen, daß man die Walzenoberflächen mit einer bestimmten Rastermustergravur versieht.

Die rasterartige Ausbildung der Walzenoberflächen kann beispielsweise aus einer Vielzahl regelmäßig zueinander angeordneter Erhebungen, mit bevorzugt kreisförmig begrenzten Oberseiten bestehen, sie kann jedoch auch aus einer Vielzahl gerader wallartiger Erhebungen mit konkav gekrümmten Oberseiten gebildet sein, die sich vorteilhaft parallelabständig zueinander erstrecken und sich dabei jeweils über die gesamte Länge jeweils achsparallel ausdehnen. Die wallartigen Erhebungen sind dabei bevorzugt unterbrechungsfrei ausgebildet.

Die Walzenoberflächen können auch gitterartig gerastert profiliert ausgebildet sein.

Die das horizontale Walzenpaar bildenden und den Dosierspalt begrenzenden Walzen werden als rotierbar ausgebildete Dosierelemente mit profiliert ausgebildeten Umfangsflächen bezeichnet.

Die Walzen des horizontalen Walzenpaares, bei dem wenigstens eine der Walzen eine profiliert ausgebildete Oberfläche besitzt, sind achsparallel zueinander angeordnet. Der Spaltraum zwischen ihren jeweils unmittelbar benachbart aufeinanderzuweisenden (Teil-)Umfangsflächen wird als Dosierspalt des Walzenpaares bezeichnet. Bei Durchführung des Verfahrens arbeiten die jeweils unmittelbar benachbart aufeinanderzuweisenden Oberseiten der Erhebungen der Walzen im Dosierspalt zusammen.

Bei der bevorzugten Ausführung des Walzenpaares sind die identisch oberflächenprofiliert ausgebildeten Walzen in der Weise zueinander angeordnet, daß sich im Bereich des Walzenspalts jeweils entsprechende Oberseiten von Erhebungen bzw. entsprechende Mündungsöffnungen von Vertiefungen der Walzen unmittelbar benachbart gegenüberstehen.

Die Walzen des Dosierwalzenpaares haben jeweils gleichen Außendurchmesser.

Die Walzen des horizontalen Walzenpaares mit profiliertem Dosierspalt sind jeweils drehbar ausgebildet sowie antreibbar. Der Antrieb der Walzen kann mittels Motoren erfolgen. Die Walzen des horizontalen Walzenpaares sind in der Weise angetrieben, daß ihre Drehrichtung der Fortbewegung des Schlauchs entspricht.

Das Dosierwalzenpaar ist als Einheit ortsfest gelagert.

Die Breite des Dosierspalts, d. h. der Abstand zwischen sich jeweils unmittelbar benachbart gegenüberliegenden Oberseiten von Erhebungen von Walzen des Walzenpaares, entspricht der doppelten Wanddicke des durch den Walzenspalt hindurchgeführten Schlauchs.

Bei jeweils gleicher Umdrehungsrichtung sowie jeweils gleicher Umdrehungsgeschwindigkeit der zusammenarbeitenden Walzen des horizontalen Walzenpaares treten im Bereich des Walzenspalts jeweils unmittelbar benachbart aufeinanderzuweisende zusammenarbeitende Oberseiten von Erhebungen der Walzen in reibschlüssigen Kontakt mit Teilen der Außenseiten des fortlaufend durch den horizontalen Spalt des Walzenpaares hindurchgeführten Schlauchs.

Die Gesamtzahl, Form und Abmessung der jeweils im Walzenspaltbereich zusammenarbeitenden Erhebungen der Walzenoberflächen bestimmen zusammen mit der Anzahl, Form und Abmessung der zwischen diesen liegenden Vertiefungen die Menge wäßriger Kunststoff-Dispersion, die beim Hindurchführen des Schlauchs durch den Spalt des Walzenpaares auf der Innenseite des den Spalt verlassenden Schlauchs abgelagert ist.

Bei dem bevorzugten Anwendungsfall überwiegt die tieferliegende Fläche der Rasterung erheblich gegenüber der Oberfläche der Erhebungen. Die Erhebungen dienen nur zum Abtasten der Schlauchwandstärke, die Vertiefungen ermöglichen den Durchlaß der Dispersion. Je dünner die gewünschte Schichtdicke, bei gegebenem Feststoffgehalt der Dispersion sein soll und je geringer der flächenartige Anteil der Oberseiten der Erhebungen ist, desto niedriger müssen die Vertiefungen sein. Die erforderlichen Abmessungen lassen sich mathematisch ermitteln.

Mit geringerem Versuchsaufwand können evtl. erforderliche Korrekturen ermittelt werden.

Beispiel

Das gewünschte Beschichtungsgewicht soll 13 g/m$^2$ sein.

Die Wandstärke des Schlauches beim Durchtritt durch den Walzenspalt 100 µm. Der Feststoffgehalt der Dispersion 25%.

Daraus ergibt sich eine Dicke des Dispersionsfilms zwischen dem flachgelegten Schlauch von 100 µm, die sich nach Verlassen des Spaltes beim Aufblasen gleichmäßig auf die Schlauchinnenseite verteilt.

Geht der Flächenanteil der Erhebungen gegen Null, so ergibt sich für den Dispersionsdurchlaß eine Vertiefung von 100 µm bei einseitiger und 50 µm bei beidseitiger Rasterung.

Beträgt die Versperrung durch die Erhebungen z. B. 4%, so muß die Tiefe um 4 bis 5% vergrößert werden, was meist zu vernachlässigen ist. In den meisten Fällen ist erst bei Versperrung über 10% eine Korrektur erforderlich.

Die Versperrung durch die Erhebungen kann jedoch auch so kompensiert werden, daß vor allen erhabenen Teilen die Vertiefungen verstärkt werden, und zwar so stark, daß an dieser Stelle genau die Menge Dispersion mehr durchgelassen wird, die durch den nachfolgend in Eingriff gelangenden erhabenen Teil an Durchtritt durch den Spalt gehindert wird. Durch die enge Nachbarschaft des dickeren und fehlenden Dispersionsantrages tritt nach Passieren des Dosiervorganges ein schnelleres Verlaufen und damit Vergleichmäßigung der Schicht ein.

Die Vertiefungen sind so gewählt, daß von diesen genau soviel Dispersion durchgelassen wird, wie zur Bildung der Schicht gewünschter Dicke aus wäßriger Kunststoff-Dispersion auf der Schlauchinnenseite erforderlich ist. Die Konzentration der Dispersion ist so zu wählen, daß sie nicht mehr frei abläuft, jedoch noch so flüssig ist, daß die infolge der Einwirkung der Erhebungen nicht mit einem Film versehenen Rasterpunkte durch Verlaufen mit Dispersion bedeckt werden. Durch mechanische Einwirkung von außen, z. B. Vibration kann das Verlaufen angeregt werden.

Besonders vorteilhaft ist ein Dosierwalzenpaar derart ausgebildet, daß eine der beiden Walzen mittels eines Anschlags derart gegenüber der anderen einstellbar ist, daß der Walzenspalt eine Breite besitzt, die der doppelten Solldicke der Schlauchwand entspricht und mindestens eine der Walzen des Walzenpaares mit einstellbarem Druck gegen den genannten Anschlag fahrbar ist.

Bei vorteilhafter Ausgestaltung des Verfahrens wird der Schlauch dem profilierten Dosierspalt des Walzenpaares dadurch zugeführt, daß man ihn in Schlauchfortbewegungsrichtung unterhalb des Dosierspalts des Walzenpaares von dem aufgeblasenen allmählich in den flachgelegten Zustand überführt. Hierzu dient beispielsweise ein Paar sich parallelabständig gegenüberliegender, flächenhafter Leitbleche, beispielsweise ein Leitblechpaar, bei dem die sich gegenüberliegenden Leitbleche einen Spaltraum begrenzen, der sich in Richtung auf den Dosierspalt des Walzenpaares zu stetig verengt. Der Schlauch wird durch diesen Raum vertikal hindurch und auf den Dosierspalt des Walzenpaares zu und in diesen hineingeführt; dabei kommen die Außenseiten des Schlauchs mit den ihnen jeweils zugewandten Oberflächen der konvergierend zueinander verlaufenden Leitbleche in Kontakt, der Schlauch wird dadurch fortlaufend und stetig zunehmend praktisch faltenfrei flachgelegt und tritt in diesem Zustand in den Dosierspalt des Walzenpaares ein.

Zur Verhinderung der Faltenbildung des Schlauches vor dem Einlaufen in den Dosierspalt, wenn er von dem aufgeblasenen allmählich in den flachgelegten Zustand übergeführt wird, werden die bei der Herstellung von extrudierten Kunststoffschläuchen üblichen Mittel, z. B. konisch auf den Dosierspalt zulaufende Rollenbahnen, die eben beschriebenen Leitbleche, Förderbänder oder Leitwalzen verwendet.

Die Dosiervorrichtung in ihrer zweiten Ausbildung besteht aus einem zusammenarbeitenden Endlosbandpaar, das einen horizontalen Dosierspalt bildet, bei dem wenigstens ein Endlosband eine profiliert ausgebildete Außenseite besitzt und bei dem die benachbart aufeinanderzuweisenden Außenseiten gerader Bandbereiche desselben gemeinsam einen Spaltraum begrenzen, dessen Breite sich von seinem einen Ende zum anderen hin stetig ändert, wobei der Abstand einanderzugewandter unmittelbar benachbarter Endlosbandaußenseiten jeweils die Breite des Spaltraums des Endlosbandpaares bestimmt. Als Spaltraumeingang wird der breiteste und als Spaltraumausgang der engste Bereich des Spaltraumes bezeichnet. Der Bereich geringster Breite des Spaltraums wird als profilierter Dosierspalt des Endlosbandpaares bezeichnet.

Die den Spaltraum des Endlosbandpaares jeweils begrenzenden Teile der profilierten Außenseiten der Endlosbänder entsprechen sich jeweils in der baulich strukturellen Ausbildung; sie befinden sich jeweils in kongruenter Anordnung zueinander.

Die gemeinsam das Endlosbandpaar bildenden förderbandartigen Endlosbänder sind symmetrisch zueinander sowie symmetrisch zu einer gemeinsamen vertikalen geraden Endlosbandpaarsymmetrieachse derart angeordnet, daß ihre geraden, benachbarten und jeweils aufeinanderzuweisenden Teile stetig konvergierend zueinander bzw. jeweils stetig konvergierend zur Symmetrieachse verlaufen, wodurch sich der Abstand der einanderzugewandt benachbarten Bandaußenseiten stetig derart verändert, daß er im Bereich des Spaltraumeingangs größer als der Durchmesser des Schlauches ist und im Bereich des Spaltraumausgangs der erforderlichen Breite des Dosierspalts entspricht. Der Spaltraumeingang befindet sich am unteren und der Spaltraumausgang am oberen Ende der aus dem Bandpaar bestehenden Vorrichtung, die im Raum derart befestigt angeordnet ist, daß ihre Symmetrielängsachse vertikal verläuft.

Die Breite des Dosierspalts wird so gewählt, daß sie der doppelten Wandstärke des Schlauchs entspricht, d. h. daß jeweils gegeneinander arbeitende Erhebungen auf den Bandaußenseiten den durch den Dosierspalt fortlaufend hindurchbewegten Schlauch im Bereich desselben praktisch zusammenpressen und sich auf der Innenseite des den Dosierspalt verlassenden Schlauchs eine flüssige, dünne Schicht aus wäßriger Kunststoff-Dispersion der angegebenen Konzentration ausbildet, die nach Vertreiben des Dispersionsmittels und Verschmelzen des Dispergierten durch Wärmeeinwirkung zu einem Kunststoffilmüberzug auf der Schlauchinnenseite führt, dessen Dicke einem Flächengewicht im Bereich von vorteilhaft 8 bis 20 g Kunststoff pro m² Substratoberfläche entspricht.

Bei der Durchführung des Verfahrens unter Verwendung der Dosiervorrichtung in Gestalt des bezeichneten Endlosbandpaares mit horizontalem Dosierspalt tritt der in Richtung von unten nach oben vertikal fortbewegte Schlauch oberhalb des Spiegels der im vertikalen Schlauchteil befindlichen Teilmenge der Beschichtungsflüssigkeit in den Spaltraum des Endlosbandpaares am Spaltraumeingang ein, durchläuft den Spaltraum in Richtung von unten nach oben vertikal in der Weise, daß die Schlauchlängsachse der Symmetrielängsachse des Endlosbandpaares praktisch entspricht, und wird beim Durchlaufen desselben auf seinem Weg zum Dosierspalt durch fortlaufenden Kontakt seiner Oberflächen mit aufeinanderzuweisenden Endlosbandaußenseiten stetig zunehmend abgeflacht und faltenfrei in den profilierten Dosierspalt ein- und durch diesen hindurchgeführt.

Die Zuführung des Schlauchs zum Dosierspalt der Dosiervorrichtung gemäß der Erfindung unter Faltenbildung des Schlauchs verhindernden Bedingungen durch stetig zunehmende Flachlegung desselben vor seinem Eintritt in den Dosierspalt ist insbesondere bei der Verwendung von Schläuchen großen Kalibers, beispielsweise mit einem Durchmesser von 120 mm vorteilhaft.

Die profiliert ausgebildeten Außenseiten der Endlosbänder des Endlosbandpaares sind über ihre gesamte Länge und gesamte Breite gleichartig geometrisch regelmäßig strukturiert ausgebildet.

Der Ausdruck »profiliert ausgebildet« hat dabei die in der Beschreibung zur Charakterisierung der profiliert ausgebildeten Umfangsoberflächen der Walzen des bezeichneten Dosierwalzenpaares angegebene Bedeutung. Die förderbandartigen Bänder des Endlosbandpaares sind bevorzugt gleich lang und bestehen jeweils aus einem in sich geschlossenen Band, dessen Breite wenigstens der Breite des flachgelegten Schlauchs entspricht.

Jedes Endlosband des Bandpaares weist integral zwei gerade, bevorzugt parallel zueinander verlaufende Teile auf, deren Innenseiten aufeinanderzuweisen, sie besitzen jeweils zwei sich gegenüberliegende, halbkreisförmig gekrümmte Bandbereiche. Die Seitenflächen der Endlosbänder fluchten jeweils paarweise.

Die Endlosbänder sind flexibel und bestehen aus Werkstoff, der ihnen hinreichende Formbeständigkeit verleiht, beispielsweise aus Kunststoff, Gummi oder dünnem Metall. Die formfesten Führungsrollen bestehen vorteilhaft aus Metall oder Kunststoff, beispielsweise aus Polyamid.

Die Endlosbänder umfassen jeweils ein Paar, bevorzugt gleich dimensionierter mit dem Endlosband zusammenarbeitender Führungsrollen. Die Innenseiten der gekrümmten Teile der Endlosbänder liegen dem Umfang der Führungsrollen jeweils teilweise und im Kontaktbereich kraftschlüssig an. Die Führungsrollen jedes Bandpaares sind jeweils zentrisch auf Achswellen befestigt, die jeweils drehbar gelagert sind. Eine der Achswellen jedes Bandpaares ist antreibbar ausgebildet, beispielsweise dadurch, daß das Ende derselben mit einem Motor verbunden ist.

Die Achsen der Führungsrollen jedes Endlosbandes des Bandpaares verlaufen jeweils horizontal sowie parallelabständig zueinander.

Die Endlosbänder des Endlosbandpaares sind dabei in der Weise zueinander angeordnet, daß jeweils die obere Führungsrolle des Führungsrollenpaares des einen Endlosbandes mit der oberen Führungsrolle des Führungsrollenpaares des anderen Endlosbandes ein Rollenpaar bildet, wobei durch die Achsen des Rollenpaares eine gemeinsame, horizontale Ebene legbar ist. Die bezeichnete »obere« Führungsrolle eines Führungsrollenpaares eines Endlosbandes bezieht sich auf das obere Ende der Symmetrielängsachse des Endlosbandpaares.

Die Endlosbänder des Endlosbandpaares werden als rotierbare, an ihrer Außenseite profiliert ausgebildete Elemente bezeichnet, die den profiliert ausgebildeten Dosierspalt der Dosiervorrichtung jeweils begrenzen.

Bevorzugt besitzen die Endlosbänder auf ihren Innenseiten und die Führungsrollen auf ihren Umfangsflächen jeweils gegengleiche Oberflächenstruktur, die derart ausgebildet ist, daß dadurch der kraftschlüssige Kontakt zwischen beiden verstärkt wird.

Die Endlosbänder des Bandpaares werden jeweils mit gleicher Umfangsgeschwindigkeit und jeweils in entgegengesetzter Umfangsrichtung angetrieben. Die profilierte Ausbildung der Oberfläche des einen Endlosbandes ist identisch mit der profilierten Ausbildung der Oberfläche des anderen.

Zur weitgehenden Konstanthaltung des Abstands zwischen dem Spiegel der Beschichtungsflüssigkeit, die im Hohlraum des vertikal von unten nach oben fortbewegten Schlauchs eingeschlossen ist, und dem Dosierspalt der Dosiervorrichtung während der gesamten Beschichtungsdauer ist es bei der Durchführung beider Verfahrensvarianten vorteilhaft, den mit einer bestimmten Vorratsmenge Beschichtungsflüssigkeit gefüllten Schlauchteil derart zu führen, daß dieser Schlauchteil vor Bildung des geraden, in schräger Richtung von oben nach unten verlaufenden Teils des Schlauchs zunächst unter Bildung wenigstens einer, mit Beschichtungsflüssigkeit gefüllten Schlaufe geführt wird. In der Schlauchschlaufe erstreckt sich die Schlauchlängsachse in einer einzigen Ebene, die sich beispielsweise in kurzem Abstand unterhalb der horizontalen Ebene des Dosierspalts befindet. Die plane Auflagefläche für die horizontale Schlauchschlaufe wird als Auflageplatte bezeichnet und besitzt beispielsweise geringe Neigung derart, daß die Flüssigkeit in der Schlauchschlaufe bestrebt ist, im Schlauch in Richtung auf die Dosiereinrichtung hinzufließen. Zur Nachförderung der Beschichtungsflüssigkeit kann auch ein Walzenpaar oder Förderbänder (DE-C-26 59 000 und DE-C-25 57 994), eingesetzt werden, welche außerdem den Vorteil zeigen, daß keine Beschichtungsflüssigkeit in Gegenrichtung zur Schlauchfortbewegung fließen kann.

Die Auflageplatte für die horizontale Schlauchschleife kann beispielsweise an einem Gestell befestigt sein.

Um den stetig in Richtung seiner Längsachse fortbewegten Schlauch auf der Auflageplatte in Gestalt einer horizontalen Schlauchschlaufe führen zu können, ist an deren Oberseite wenigstens eine drehbar ausgebildete Umlenkrolle vorgesehen, deren Achse einen rechten Winkel mit der Plattenebene bildet.

Die Umlenkrollenachse ist mit ihrem einen Ende an der Auflageplatte befestigt.
Zur Bildung einer horizontalen Schlauchschlaufe wird der mit Beschichtungsflüssigkeit gefüllte Schlauch derart geführt, daß er mit seiner Außenseite teilweise an den Umfang der Umlenkwalze angrenzt und von dieser unter Bildung einer Schlaufe umgelenkt wird.

Die zur Durchführung des erfindungsgemäßen Verfahrens geeigneten Vorrichtungen umfassen jeweils auch die erforderlichen Einrichtungen zur lagefixierten Halterung der einzelnen Vorrichtungselemente.

Für die erfindungsgemäße Verfahrensdurchführung ist es charakteristisch, daß der Cellulosehydratschlauch in derjenigen Zeitspanne, in der er in Kontakt mit wäßriger Kunststoff-Dispersion der angegebenen Konzentration steht, aus dieser Dispersion jeweils nur eine solche Menge Wasser aufnimmt, bzw. daß nur eine derartige Menge Wasser aus der flüssigen Schicht in den Cellulosehydratschlauch diffundiert, daß dabei der Wasseranteil im Cellulosehydratschlauch wesentlich geringer ist als der, der dem Quellwert (Wasserrückhaltungsvermögen) des Cellulosehydratschlauchs entspricht.

Der Wassergehalt des Schlauchs bei der Verfahrensdurchführung beträgt vorzugsweise 20 bis 30%, insbesondere nur ca. ein Viertel derjenigen Wassermenge, die dem Quellwert des Ausgangsschlauchs entspricht. (Bestimmung des Quellwerts nach DIN 53 814; »Färberei und textilchemische Untersuchungen«, A. Agster, S. 450, Springer Verlag 1967, 10. Auflage.)

Die Vorteile der Erfindung gegenüber dem Bekannten gehen aus nachfolgenden Vergleichen hervor:

Zur Herstellung eines Filmüberzugs beispielsweise eines solchen einer Dicke entsprechend einem Flächengewicht von 10 g Kunststoff pro m² Substratoberfläche müssen nach dem bekannten Verfahren bei Verwendung von wäßriger Kunststoff-Dispersion üblicher Konzentration, beispielsweise von 6,5 Gew.-% dispergiertem Kunststoff, 143,8 g Wasser pro m² Substratoberfläche durch Wärmeeinwirkung auf den Schlauch vertrieben werden, um den bezeichneten Filmüberzug zu bilden.

Zur Ausbildung eines Kunststoffüberzugs einer Dicke entsprechend 10 g Kunststoff pro m² Substratoberfläche auf der Schlauchinnenseite ist dagegen bei Durchführung der erfindungsgemäßen Verfahrensweise bei Verwendung einer beispielsweie 30gew.-%igen Kunststoff-Dispersion nur 23,3 g Wasser pro m² Substratoberfläche durch Wärmeeinwirkung auf den Schlauch nach der Ausbildung des Filmüberzugs zu vertreiben.

Das erfindungsgemäße Verfahren in seinen beiden Varianten erfordert demnach zur Herstellung eines Kunststoff-Filmüberzugs einer Dicke entsprechend 10 g Kunststoff pro m² Substratoberfläche nur ein Sechstel derjenigen Wärmeenergie, die bei der Durchführung der bekannten Beschichtungsverfahren zur Ausbildung eines Filmüberzugs der gleichen Dicke erforderlich ist.

Das erfindungsgemäße Verfahren erlaubt zudem wegen der geringen Menge des zu vertreibenden Wassers aus der flüssigen Schicht aus wäßriger Kunststoff-Dispersion zur Ausbildung eines Kunststoff-Films auf der Schlauchinnenseite eine erhebliche Steigerung der Beschichtungsgeschwindigkeit.

Durch das erfindungsgemäße Verfahren werden wegen der bei seiner Durchführung verwendeten wäßrigen Kunststoff-Dispersion mit hohem Anteil an dispergiertem Kunststoff aus folgendem Grunde Beschichtungsmängel vermieden: Ein Cellulosehydratschlauch mit einem Quellwert von beispielsweise 120% als Verfahrensausgangsprodukt muß nach den bekannten Verfahren zur Innenbeschichtung mit einer beispielsweise 6,5gew.-% wäßrigen Kunststoff-Dispersion und zur Ausbildung eines Filmüberzugs entsprechend einer Dicke von beispielsweise 10 g Kunststoff pro m² Substratoberfläche 143,8 g Wasser pro m² aufnehmen, welches durch Diffusion durch die Schlauchwand transportiert werden muß.

Bei der Durchführung des erfindungsgemäßen Verfahrens wird dagegen bei Verwendung einer Kunststoff-Dispersion, die beispielsweise 30 Gew.-% dispergierten Kunststoffanteil enthält, der Ausgangsschlauch mit dem angegebenen Quellwert von ca. 120% nur leicht befeuchtet.

Da zur Ausbildung des unterbrechungsfreien Kunststoff-Filmüberzugs auf der Schlauchinnenseite durch Vertreiben des Dispersionsmittels aus der flüssigen Schicht aus wäßriger Kunststoff-Dispersion die gesamte Wassermenge der flüssigen Schicht durch Diffusion durch die Schlauchwand nach außen abtransportiert werden muß, bestimmt die Diffusionsgeschwindigkeit sowie der Wasseranteil in der flüssigen Schicht wesentlich die Geschwindigkeit, mit der das Beschichtungsverfahren durchführbar ist.

Die Vorteile des erfindungsgemäßen Verfahrens in seinen beiden Ausbildungen werden nachfolgend kurz zusammengefaßt:

1. Anwendung von wäßriger Kunststoff-Dispersion mit hohem Anteil an dispergiertem Kunststoff, energetisch günstige Verfahrensdurchführung, Möglichkeit das Verfahren mit einer Geschwindigkeit durchzuführen, die doppelt bis vierfach so groß ist wie die Beschichtungsgeschwindigkeit bei bekannten Verfahren.

2. Kein freier Ablauf der wäßrigen Dispersion.

3. Gezielte Dosierung und Vergleichmäßigung des Dispersionsauftrags; Vermeidung von Ablauffehlern.

4. Weichmacheranreicherung im Dispersionssumpf wirkt sich wegen des hohen Anteils an Dispergiertem nur unerheblich auf die Qualität des Filmüberzugs aus.

5. Die gewünschte Schichtstärke ist wegen der Verwendung wäßriger Kunststoff-Dispersion mit angegebenem Gehalt an dispergiertem Kunststoff bzw. an Dispersionsmittel und exakter Dosierung im Dosierspalt der Vorrichtung nahezu unabhängig von den Diffusionseigenschaften des Ausgangsschlauchs.

6. Die Verfahrensdurchführung wird, ausgehend von einem aufzubringenden Filmüberzug bestimmter Dicke, durch den im Verhältnis zu den bekannten Beschichtungsverfahren geringen Gesamtbedarf an wäßriger Dispersion zur Innenbeschichtung des Schlauchstücks erheblich erleichtert. Bei sehr langen Schlauchstücken muß gemäß dem erfindungsgemäßen Verfahren die Beschichtungsflüssigkeit in wesentlich längeren Zeitabständen nachgefüllt werden als bei bekannten Verfahren, wobei der Schlauchabfall durch das zum Nachfüllen notwendige Einschneiden des Schlauchs wesentlich verringert wird.

7. Es wird eine Einrichtung zum gleichzeitigen Nachfördern von Beschichtungsflüssigkeit und zum Verhindern des Zurückfließens dieser Flüssigkeit entgegen der Schlauchfortbewegungsrichtung vorgeschlagen.

Das Verfahren in seinen beiden Varianten sowie die zu deren Durchführung geeigneten Vorrichtungen werden nachfolgend anhand der Zeichnungen beispielhaft beschrieben.

Die Erfindung wird nachfolgend anhand einer Zeichnung beispielhaft beschrieben, wobei die Zeichnung in

Fig. 1 die eine und in
Fig. 2 die andere Erfindungsvariante darstellt.

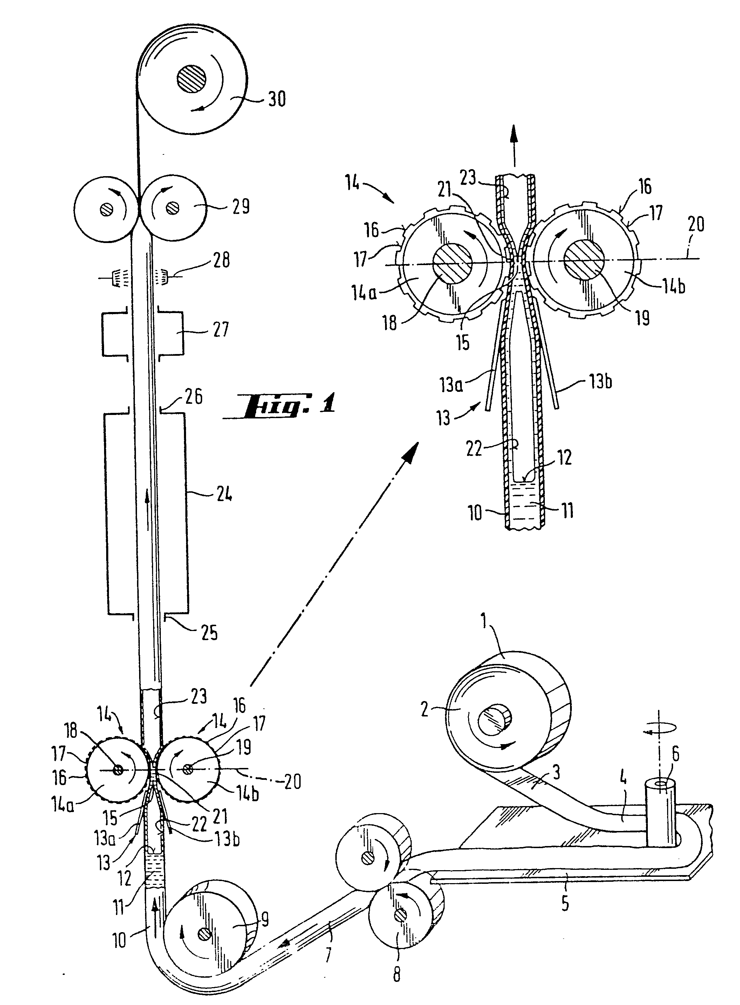

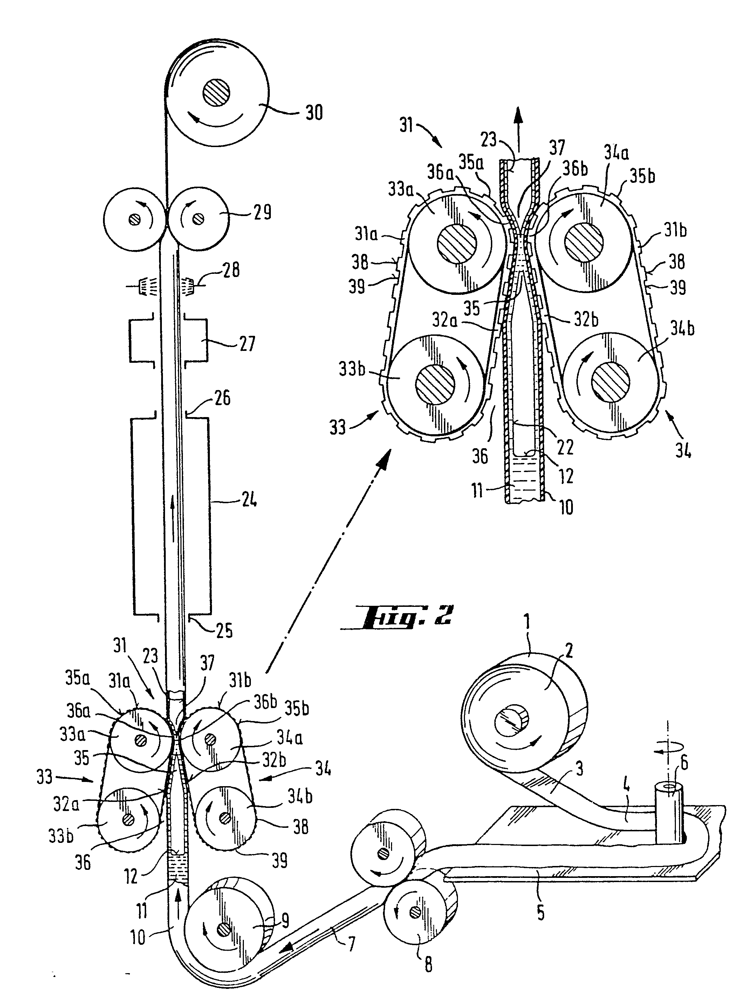

In der Fig. 1 sowie in der Fig. 2 ist jeweils der Verfahrensablauf und die zur Durchführung des jeweiligen Verfahrens geeignete Vorrichtung schematisch und im Querschnitt dargestellt.

In Fig. 1 bedeutet 1 eine Vorratsrolle mit darauf aufgewickeltem Schlauch 2, es ist 3 ein von der Vorratsrolle abgezogener in Richtung seiner Längsachse fortbewegter Schlauch, 4 eine horizontale Schlauchschlaufe, die auf einer Unterlage 5 aufliegt, 6 ist eine an der Oberseite der Unterlage 5 befestigte, drehbar ausgebildete Umlenkrolle, 7 ist ein Schlauchstück, das in Richtung der Schlauchfortbewegung schräg von oben nach unten verläuft, 8 ist ein Walzenpaar zur Nachförderung der Beschichtungsflüssigkeit 11 und zur Verhinderung des Zurückfließens der Beschichtungsflüssigkeit 11 in die Schlauchschlaufe 4, 9 ist eine Umlenkrolle und 10 ein in Richtung von unten nach oben vertikal verlaufendes Schlauchstück, 12 ist der Spiegel der Beschichtungsflüssigkeit 11 im Hohlraum des vertikalen Schlauchstücks, 13 ist ein Leitblechpaar mit den Leitblechen 13a und 13b, es ist 14 ein horizontales Walzenpaar mit Walzen 14a und 14b die den Dosierspalt 15 bilden, wobei die Oberflächen der Walzen 14a und 14b Profilierungen in Gestalt von Vorsprüngen 16 sowie Vertiefungen 17 besitzen, 18 und 19 sind die Achsen der Walzen 14a und 14b, 20 ist die horizontale Achsebene des Walzenpaares, 21 der Schlauch im Bereich des Dosierspalts 15, es bedeutet 22 eine flüssige Schicht aus wäßriger Kunststoff-Dispersion auf der Schlauchinnenseite vor Eintritt desselben in den Dosierspalt und 23 eine flüssige Schicht aus wäßriger Kunststoff-Dispersion auf der Innenseite des Schlauchs nach Austritt aus dem Dosierspalt, 24 ist ein beispielsweise mit Heißluft beaufschlagter Trockentunnel, wobei 25 seinen Eingang und 26 seinen Ausgang bedeutet, 27 ist eine Kühlluftdusche, durch die der getrocknete Schlauch hindurchgeführt wird, 28 eine Sprüheinrichtung zur Beaufschlagung des getrockneten Schlauchs mit Wasser, 29 ist ein Quetschwalzenpaar, durch dessen Walzenspalt der Schlauch hindurchgeführt wird, 30 ist eine drehbar ausgebildete mit Hilfe eines Motors antreibbare und angetriebene Vorratsrolle zum Aufwickeln des Schlauchs.

In der Fig. 2 haben die Ziffern 1 bis 12 sowie 22 bis 30 dieselbe Bedeutung wie in Fig. 1.

Die Ziffer 31 bedeutet ein zusammenarbeitendes Endlosbandpaar, 31a bedeutet sein erstes und 31b sein zweites Endlosband, 32a ist ein gerader Teil des ersten und 32b ein gerader Teil des zweiten Endlosbandes, 36a ist ein gekrümmter Teil des ersten Endlosbandes und 36b ein gekrümmter Teil des zweiten Endlosbandes, 33a und 33b sind Führungsrollen des ersten Endlosbandes und 34a und 34b Führungsrollen des zweiten Endlosbandes, die Führungsrollen bilden jeweils Führungsrollenpaare 33 und 34. 35a ist die profiliert ausgebildete Außenseite des ersten Endlosbandes und 35b die profiliert ausgebildete Außenseite des zweiten Endlosbandes, 35 ist der sich stetig verengende, jeweils durch die Bandaußenseiten 35a und 35b begrenzte Spaltraum des Endlosbandpaares, 36 ist der Spaltraumanfang und 37 das als profilierter Dosierspalt bezeichnete Spaltraumende, 38 sind Erhebungen und 39 Vertiefungen auf der Außenseite der Endlosbänder.

Aus Gründen der zeichnerischen Vereinfachung werden die Motoren zum Antrieb der Vorratsrolle 30 der Führungswalzen 33 und 34 nicht dargestellt, desgleichen sind die Vorrichtungen zur lagefixierten Halterung der einzelnen angegebenen Elemente nicht gezeichnet.

In Abänderung der in den Figuren 1 und 2 gezeigten Profilierungen 16, 17, 38, 39 der Walzen 14a, 14b bzw. der Endlosbänder 31a, 31b stehen in bevorzugter Ausführungsform die jeweiligen Vorsprünge 16 bzw. Erhebungen 38 der Walze 14a bzw. des Endlosbandes 31a den Vorsprüngen/Erhebungen 16/38 der Walze 14b bzw. des Endlosbandes 31b im Spaltraum spiegelbildlich gegenüber.

## Patentansprüche

1. Verfahren zur Herstellung einer schlauchförmigen Verpackungshülle, insbesondere Wursthülle, auf Basis von Cellulose mit einem Überzug auf der Innenseite, bei dem der Schlauch zunächst längsaxial in Richtung von oben nach unten und anschließend von unten nach oben unter Bildung einer Schlauchschlaufe fortbewegt wird, wobei im Bereich der Schlauchschlaufe im Schlauchhohlraum sich eine geschlossene Menge Beschichtungsflüssigkeit befindet, bestehend aus einer wäßrigen Flüssigkeit, die einen zur Bildung eines Überzugs befähigten chemischen Stoff enthält, bei dem ferner der fortlaufend von unten nach oben fortbewegte Schlauchteil oberhalb des Spiegels der Beschichtungsflüssigkeit vertikal durch einen Spalt hindurch geführt wird, der so ausgebildet ist, daß die Masse der Beschichtungsflüssigkeit im Spalt zurückgehalten und nur ein Film geringer Dicke aus Beschichtungsflüssigkeit auf der Innenseite des aus dem Spalt austretenden Schlauchs ausgebildet wird, bei dem der Schlauch mit Stützgas gefüllt und aufgeblasen der Einwirkung von Wärme unterworfen wird, wobei der innere Überzug ausgebildet wird, der Schlauch abgekühlt, gegebenenfalls befeuchtet, flachgelegt und aufgewickelt wird, dadurch gekennzeichnet, daß der von unten nach oben fortbewegte Schlauchteil vor dem Spalt in einer in Laufrichtung sich keilförmig verengenden Zone allmählich in die auf Spaltbreite flachgelegte Form überführt wird, im Spalt in rasterartigen Teilflächen zusammengedrückt und unmittelbar nach Verlassen des Spaltes mit Stützgas gefüllt und aufgeblasen und weiterhin von unten nach oben unter Einwirkung von Wärme geführt wird, wobei sich ein innerer unterbrechungsfreier Filmüberzug mit gleichmäßiger Dicke ausbildet.

2. Verfahren nach Anspruch 1, dadurch gekennzeichnet, daß man als Beschichtungsflüssigkeit eine wäßrige Kunststoff-Dispersion mit einem Anteil von wenigstens 15 Gew.-% dispergiertem Kunststoff, bezogen auf das Gesamtgewicht der Dispersion, einsetzt.

3. Verfahren nach Anspruch 1 oder 2, dadurch gekennzeichnet, daß insgesamt 10 bis 15% der Gesamtfläche des Schlauches im Spalt zusammengedrückt wird.

4. Verfahren nach einem der Ansprüche 1 bis 3, dadurch gekennzeichnet, daß man den Schlauch beim Zuführen auf den Spalt allmählich in den flachgelegten Zustand überführt.

5. Verfahren nach einem der Ansprüche 1 bis 4, dadurch gekennzeichnet, daß man die Zurückpressung der in der Schlauchschlaufe befindlichen Beschichtungsflüssigkeit in Richtung entgegen der Schlauchfortbewegung und auf die Vorratsrolle zu verhindert.

6. Verfahren nach Anspruch 5, dadurch gekennzeichnet, daß man den mit Beschichtungsflüssigkeit gefüllten Teil der Schlauchschlaufe, vorzugsweise in seinem schräg in Richtung von oben nach unten verlaufenden Bereich, zusammenpreßt, insbesondere durch fortlaufendes partielles Zusammenpressen unter gleichzeitiger Förderung der im Hohlraum der Schlauchschlaufe befindlichen Beschichtungsflüssigkeit in Richtung auf die Dosiereinrichtung.

7. Verfahren nach einem der Ansprüche 1 bis 6, dadurch gekennzeichnet, daß der Schlauch mit einer Geschwindigkeit im Bereich von 8 bis 60 m/min fortbewegt wird.

8. Verfahren nach einem der Ansprüche 2 bis 7, dadurch gekennzeichnet, daß die zur Beschichtung verwendete wäßrige Kunststoff-Dispersion einen Anteil an dispergiertem Kunststoff im Bereich zwischen 15 bis 60 Gew.-%, bezogen auf das Gesamtgewicht der Dispersion, besitzt.

9. Verfahren nach Anspruch 8, dadurch gekennzeichnet, daß der aus dem Dosierspalt austretende mit Stützgas gefüllte Schlauch an seiner Innenseite eine flüssige Schicht aus wäßriger Kunststoff-Dispersion einer solchen Dicke aufweist, daß sich aus ihr nach Vertreibung des Dispersionsmittels und Verschmelzen des Dispergierten durch Wärmeeinwirkung ein unterbrechungsfreier Filmüberzug bildet, dessen Dikke einem Flächengewicht von 8 bis 20 g Kunststoff pro m² Substratoberfläche entspricht.

10. Vorrichtung zur Durchführung des Verfahrens nach Anspruch 1, umfassend eine Einrichtung mit einem durch ein horizontales Walzenpaar (14) gebildeten Spalt, durch den der mit Beschichtungsflüssigkeit auf seiner Innenseite versehene Schlauch im flachgelegten Zustand hindurchgeführt wird, einen nachfolgenden geraden Trockentunnel (24), ein nach dem Trockentunnel angeordnetes Quetschwalzenpaar (29) sowie eine nachfolgende Rolle (30) zum Aufwikkeln des Verfahrenserzeugnisses, dadurch gekennzeichnet, daß die Umfangsfläche wenigstens einer Walze (14a, 14b) des horizontalen Walzenpaares (14) profiliert ausgebildet ist, und das Walzenpaar (14) einen horizontalen einstellbaren Dosierspalt (15) bildet, daß der Trockentunnel (24), der oberhalb des Dosierspaltes (15) angeordnet ist, nach oben gerichtet ist, daß das Quetschwalzenpaar (29) oberhalb des Trockentunnels (24) angeordnet ist und daß die Vorrichtung gegebenenfalls eine Einrichtung (28) zur Befeuchtung des Schlauchs nach dem Trockentunnel (24) umfaßt.

11. Vorrichtung nach Anspruch 10, dadurch gekennzeichnet, daß in Richtung der Schlauchfortbewegung vor dem Dosierspalt (15) eine Einrichtung zur fortlaufenden und allmählichen Flachlegung des Schlauchs und zur Verhinderung der Faltenbildung des Schlauchs und zur faltenfreien Einführung in den Dosierspalt (15), insbesondere ein Leitblechpaar (13), vorgesehen ist.

12. Vorrichtung zur Durchführung des Verfahrens nach Anspruch 1, umfassend eine Einrichtung mit einem Spalt, durch den der mit Beschichtungsflüssigkeit auf seiner Innenseite versehene Schlauch im flachgelegten Zustand hindurchgeführt wird, einen nachfolgenden geraden Trockentunnel (24), ein nach dem Trockentunnel angeordnetes Quetschwalzenpaar (29) sowie eine nachfolgende Rolle (30) zum Aufwikkeln des Verfahrenserzeugnisses, dadurch gekennzeichnet, daß die Einrichtung mit dem Spalt durch ein vertikal angeordnetes Endlosbandpaar (31) gebildet wird, bei dem die Außenseite (35a, 35b) wenigstens eines Endlosbandes (31a, 31b) profiliert ausgebildet ist, und das Endlosbandpaar (31) einen horizontalen einstellbaren Dosierspalt (37) bildet, daß der Trockentunnel (24), der oberhalb des Dosierspaltes (37) angeordnet ist, nach oben gerichtet ist, daß das Quetschwalzenpaar (29) oberhalb des Trockentunnels (24) angeordnet ist und daß die Vorrichtung gegebenenfalls eine Einrichtung (28) zur Befeuchtung des Schlauchs nach dem Trockentunnel (24) umfaßt.

13. Vorrichtung nach einem der Ansprüche 10 bis 12, dadurch gekennzeichnet, daß sie eine in Schlauchfortbewegungsrichtung vor dem Dosierspalt (37) angeordnete Einrichtung, insbesondere ein Walzenpaar (8), zur Verhinderung des Zurückpressens von Beschichtungsflüssigkeit entgegen der Schlauchfortbewegung umfaßt, welche vorzugsweise gleichzeitig zur Förderung von Beschichtungsflüssigkeit in Schlauchfortbewegungsrichtung geeignet ist.

**Claims**

1. A process for the manufacture of a tubular packaging sheath, particularly a sausage casing, based on cellulose and having a coating on its inside, in which the tubing is transported in the direction of its longitudinal axis, first in a downward direction and thereafter in an upward direction thereby forming a tubing loop, with a quantity of coating liquid being enclosed in the cavity of the tubing located in the region of the tubing loop the coating liquid comprising an aqueous liquid which contains a chemical substance capable of forming a coating, in which, moreover, the continuously upwardly transported part of the tubing is passed vertically and, above the level the coating liquid, through a nip which is so constructed that the bulk of the coating liquid is retained in the nip and only a film of low thickness of the coating liquid is formed on the inside of the tubing issuing from the nip, in which the tubing is filled with support gas and the inflated tubing is subjected to the action of heat, thus forming the internal coating, the tubing is cooled, optionally moistened, laid flat and wound up, wherein the part of the tubing which is transported in the upward direction is gradually, upstream of the nip and in a zone which narrows in V-form in the direction of travel, converted into a flattened shape corresponding to the width of the nip, is compressed in the nip in the form of screen-shaped partial areas and is filled with support gas and inflated immediately after issuing from the nip and is further transported in the upward direction under the action of heat, thereby forming an internal uninterrupted film coating of uniform thickness.

2. A process as claimed in claim 1, wherin the coating liquid used comprises an aqueous polymer dispersion which contains at least 15% by weight of dispersed polymer, based on the total weight of the dispersion.

3. A process as claimed in claim 1 or claim 2, wherein a total of 10 to 15% of the entire surface of the tubing are compressed in the nip.

4. A process as claimed in any of claims 1 to 3, wherein the tubing is gradually converted into the layflat state, while being led towards the nip.

5. A process as claimed in any of claims 1 to 4, wherein the coating liquid contained in the tubing loop is prevented from being pressed backwards in the direction counter to the direction of travel of the tubing and towards the stock reel.

6. A process as claimed in claim 5, wherein the part of the tubing loop which is filled with coating liquid is preferably compressed in its region which runs in a downwardly inclined direction, in particular by continuously partially compressing the tubing and simultaneously conveying the coating liquid present in the cavity of the tubing loop in the direction of the metering device.

7. A process as claimed in any of claims 1 to 6, wherein the tubing is transported at a speed in the range of 8 to 60 m/min.

8. A process as claimed in any of claims 2 to 7, wherein the aqueous polymer dispersion used for coating contains from 15 to 60% by weight of dispersed polymer, based on the total weight of the dispersion.

9. A process as claimed in claim 8, wherein the tubing issuing from the metering nip and being filled with support gas possesses, on its inside, a liquid layer of aqueous polymer dispersion of a thickness such that it forms, after expulsion of the dispersion medium and fusion of the dispersed component by the action of heat, an uninterrupted film coating which has a thickness corresponding to a weight per unit area of 8 to 20 g of polymer per $m^2$ of substrate surface.

10. An apparatus for carrying out the process as claimed in claim 1, comprising an arrangement having a nip, through which the tubing carrying coating liquid on its inside is passed in the layflat state, a downstream straight drying tunnel (24), a pair of squeeze rollers (29) arranged behind the drying tunnel and a following reel (30) for winding up the process product, wherein the arrangement with the nip comprises a horizontal pair of rolls (14), in which the circumferential surface of at least one roll (14a, 14b) is profiled and the pair of rolls (14) forms a horizontal adjustable metering nip (15), the drying tunnel (24) which is arranged above the metering nip (15) points in the upward direction, the pair of squeeze rollers (29) is arranged above the drying tunnel (24) and the apparatus optionally includes a device (28) for moistening the tubing, which is disposed behind the drying tunnel (24).

11. An apparatus as claimed in claim 10, wherein a device for continuously and gradually flattening the tubing and for preventing a formation of creases in the tubing and for introducing the tubing in a crease-free manner into the metering nip (15), is provided upstream of the metering nip (15) in the direction of travel of the tubing and comprises, in particular, a pair of guide panels (13).

12. An apparatus for carrying out the process as claimed in claim 1, comprising an arrangement having a nip, through which the tubing provided with coating liquid on its inside is passed in the layflat state, a downstream straight drying tunnel (24), a pair of squeeze rollers (29) arranged behind the drying tunnel and a following reel (30) for winding up the process product, wherein the arrangement with the nip comprises a vertically arranged pair of endless belts (31), in which the outer face (35a, 35b) of at least one endless belt (31a, 31b) is profiled and the pair of endless belts (31) forms a horizontal adjustable metering nip (37), the drying tunnel (24) which is arranged above the metering nip (37) points in the upward direction, the pair of squeeze rollers (29) is arranged above the drying tunnel (24) and the apparatus optionally includes a device (28) for moistening the tubing, which is disposed behind the drying tunnel (24).

13. An apparatus as claimed in any of claims 10 to 12, which includes a device, in particular a pair of rolls (8), arranged upstream of the metering nip (37) in the direction of travel of the tubing, for preventing backward pressing of coating liquid in the direction counter to direction of travel of the tubing, the device being preferably simultaneously suitable for conveying coating liquid in the direction of travel of the tubing.

## Revendications

1. Procédé de fabrication d'une enveloppe tubulaire, notamment, d'une peau de saucisse, à base de cellulose, avec un revêtement sur sa surface interne, dans lequel on fait tout d'abord avancer le tube selon son axe longitudinal, de haut en bas puis de bas en haut, en formant une boucle de tube, cependant que, dans la région de la boucle de tube, dans la cavité du tube est enfermée une quantité de liquide d'enduction composé d'un liquide agueux qui contient une substance chimique appropriée pour la formation d'un revêtement, dans lequel, en outre, la partie du tube qui est déplacée en continu de bas en haut est guidée, au-dessus de la surface libre du liquide d'enduction, dans une direction verticale, à travers une fente qui a une configuration telle que la masse du liquide d'enduction est retenue dans la fente et que seul un film de faible épaisseur de liquide d'enduction se forme sur la face interne du tube sortant de la fente, dans lequel, le tube rempli de gaz d'appui et gonflé est soumis à l'action de la chaleur, de sorte que le revêtement intérieur est formé, le tube est refroidi, éventuellement humidifié, mis à plat et enroulé, caractérisé en ce que la partie de tube qui est déplacée de bas en haut, en amont de la fente, dans une zone qui se rétrécit en coin dans le sens du déplacement est transformé progressivement jusqu'à une forme aplatie de la largeur de la fente, comprimé dans la fente dans des surfaces partielles en forme de réseau et, immédiatement après avoir quitté la fente, rempli de gaz de soutien, gonflé et, en outre, guidé de bas en haut en même temps qu'il subit l'action de la chaleur, de sorte qu'il se forme un revêtement pelliculaire intérieur d'épaisseur uniforme et dépourvu de solutions de continuité.

2. Procédé selon la revendication 1, caractérisé en ce qu'on utilise comme liquide d'enduction une dispersion aqueuse de matière plastique contenant une proportion d'au moins 15% en poids de matière plastique dispersée, rapportée au poids total de la dispersion.

3. Procédé selon la revendication 1 ou 2, caractérisé en ce qu'au total 10 à 15% de la surface totale du tube sont comprimés dans la fente.

4. Procédé selon l'une des revendications 1 à 3, caractérisé en ce qu'on amène progressivement le tube à l'état aplati pendant qu'on l'achemine vers la fente.

5. Procédé selon l'une des revendications 1 à 4, caractérisé en ce qu'on interdit le refoulement du liquide d'enduction contenu dans la boucle de tube, dans le sens inverse du sens d'avance du tube et en direction de la bobine d'alimentation.

6. Procédé selon la revendication 5, caractérisé en ce qu'on comprime la partie de la boucle de tube remplie de liquide d'enduction, de préférence dans sa région qui s'étend obliquement de haut en bas, en particulier par compression partielle continuelle, en même temps qu'on fait avancer le liquide d'enduction qui se trouve dans la cavité de la boucle de tube vers le dispositif de dosage.

7. Procédé selon l'une des revendications 1 à 6, caractérisé en ce qu'on fait avancer le tube avec une vitesse de l'ordre de 8 à 60 m/mn.

8. procédé selon l'une des revendications 2 à 7, caractérisé en ce que la dispersion aqueuse de matière plastique utilisée pour l'enduction a une teneur en matière plastique dispersée de l'ordre de 15 à 60% en poids, rapportée au poids total de la dispersion.

9. Procédé selon la revendication 8, caractérisé en ce que le tube sortant de la fente de dosage et rempli de gaz d'appui présente sur sa surface interne une couche liquide de dispersion aqueuse de matière plastique d'une épaisseur telle qu'il se forme à partir de cette couche, après expulsion de l'agent de dispersion et fusion de la matière dispersée par l'action de la chaleur, un revêtement pelliculaire dépourvu de solutions de continuité dont l'épaisseur correspond à un poids par unité de surface de 8 à 20 g de matière plastique par $m^2$ de surface de substrat.

10. Machine pour la mise en oeuvre du procédé selon la revendication 1 comprenant un dispositif avec une fente à travers laquelle est entraîné le tube, à l'état aplati, muni d'un liquide d'enduction sur sa surface interne, un tunnel de séchage rectiligne (24) placé en aval, une paire de rouleaux de pincement (29) disposés en aval du tunnel, ainsi qu'une bobine (30) placée en aval pour l'enroulement du produit fabriqué, caractérisée en ce que le dispositif ayant une fente est formé par une paire horizontale de rouleaux (14), dans laquelle la surface périphérique d'au moins un rouleau (14a, 14b) est profilée, et la paire de rouleaux (14) forme une fente de dosage réglable horizontale (15), en ce que le tunnel de séchage (24) qui est disposé au-dessus de la fente de dosage (15) est dirigé vers le haut, en ce que la paire de rouleaux de pincement (29) est agencée au-dessus du tunnel de séchage (24), et en ce que la machine comprend éventuellement un dispositif (28) placé en aval du tunnel de séchage (24) et destiné à humindifier le tube.

11. Machine selon la revendication 10, caractérisée en ce que, en amont de la fente de dosage (15), dans le sens de l'avancement du tube, est prévu un dispositif servant à aplatir le tube de façon continue et progressive et à empêcher qu'il ne se forme des plis dans le tube, ainsi qu'à introduire le tube sans plis dans la fente de dosage (15), notamment une paire de tôles de guidage (13).

12. Machine pour la mise en oeuvre du procédé selon la revendication 1, comprenant un dispositif avec une fente à travers laquelle est guidé, à l'état aplati, le tube muni d'un liquide d'enduction sur sa surface interne, un tunnel de séchage (24) rectiligne placé en aval, une paire de rouleaux de pincement (29) disposés en aval du tunnel de séchage, ainsi qu'une bobine (30) placée en aval, destinée à l'enroulement du produit fabriqué, caractérisé en ce que le dispositif ayant la fente est formé d'une paire de bandes sans fin (31) disposée verticalement, dans laquelle la surface externe (35a, 35b) d'au moins une bande sans fin (31a, 31b) est profilée, et la paire de bandes sans fin (31) forme une fente de dosage (37) réglable horizontale, en ce que le tunnel de séchage (24), qui est disposé au-dessus de la fente de dosage (37) est dirigé vers le haut, en ce que la paire de rouleaux de pincement (29) est disposée au-dessus du tunnel de séchage (24) et en ce que la machine comprend éventuellement un dispositif destiné à humidifier le tube en aval du tunnel de séchage (24).

13. Machine selon l'une des revendications 10 à 12, caractérisé en ce qu'elle comprend un dispositif disposé en amont de la fente de dosage (37) dans le sens de l'avance du tube, en particulier une paire de rouleaux (8), qui est destiné à empêcher le liquide d'enduction de refluer en sens inverse du sens de l'avance du tube, et qui est de préférence approprié en même temps pour faire avancer le liquide d'enduction dans le sens de l'avance du tube.

*Fig. 1*

**Fig. 2**